## Europäisches Patentamt
## European Patent Office
## Office européen des brevets

⑪· Numéro de publication: **0 059 495**
**B1**

(12) **FASCICULE DE BREVET EUROPEEN**

(45) Date de publication du fascicule du brevet:
16.05.84

(51) Int. Cl.³: **C 08 J 9/08, C 08 L 27/16**

(21) Numéro de dépôt: **82200168.1**

(22) Date de dépôt: **15.02.82**

---

(54) Composition comprenant un polymère du fluorure de vinylidène et un agent soufflant.

---

(30) Priorité: **24.02.81 FR 8103899**

(43) Date de publication de la demande:
**08.09.82 Bulletin 82/36**

(45) Mention de la délivrance du brevet:
**16.05.84 Bulletin 84/20**

(84) Etats contractants désignés:
**AT BE CH DE FR GB IT LI NL SE**

(56) Documents cités:
**FR - A - 1 574 796**
**US - A - 3 770 662**

(73) Titulaire: **SOLVAY & Cie (Société Anonyme), Rue du Prince Albert, 33, B-1050 Bruxelles (BE)**

(72) Inventeur: **Georlette, Pierre, Rue Scheers 3, B-5990 Hamme-Mille (BE)**
Inventeur: **Leva, Jean, Rue Profondsart, 11, B-1342 Limelette (BE)**

---

BUNDESDRUCKEREI BERLIN

## Composition comprenant un polymère du fluorure de vinylidène et un agent soufflant

La présente invention concerne une composition comprenant un polymère du fluorure de vinylidène tel que le polyfluorure de vinylidène et un agent soufflant ainsi qu'un procédé de fabrication d'objets cellulaires ou denses à partir de cette composition.

Il a déjà été proposé de réaliser des compositions comprenant un polymère dérivé du fluorure de vinylidène et un agent soufflant utilisables pour le moulage d'objets finis ou semi-finis de structure cellulaire.

Ainsi, dans DE-A 28 27 396 de PCUK-PRODIUTS CHIMIQUES UGINE KUHLMANN, on divulgue, dans l'exemple 17, une composition constituée par du polyfluorure de vinylidène contenant 1% en poids d'un agent soufflant en l'occurrence l'azodicarbonamide.

Selon cet exemple, cette composition ne permet pas le moulage par injection d'objets cellulaires de qualité acceptable puisque ceux-ci présentent des traînées noirâtres qui témoignent d'une dégration thermique du polymère. Pour éviter cet inconvénient rédhibitoire, selon ce même exemple, il convient d'incorporer dans la composition de moulage 1% en poids de polyéthylène de faible densité et 1% en poids de polytétrafluoréthylène. Toutefois, ces ingrédients sont susceptibles de modifier certaines propriétés des objets finis et les compositions qui les contiennent ne peuvent donc être utilisées pour n'importe quelle application.

Il apparaît donc qu'il ne suffit pas d'incorporer un agent soufflant classique dans un polymère du fluorure de vinylidène pour fabriquer des objets cellulaires.

La présente invention vis à procurer une composition de moulage comprenant un polymère du fluorure de vinylidène et un agent soufflant qui convient pour le moulage d'objets cellulaires et qui ne présente pas les inconvénients des compositions de moulage.

L'invention concerne à cet effet une composition de moulage comprenant un polymère du fluorure de vinylidène et un agent soufflant comprenant un acide hydroxycarboxylique ou un sel alcalin dérivé d'un de ces acides présentant une température de décomposition thermique inférieure à la température de dégradation thermique du polymère.

En effet, pareille composition ne présente aucune dégradation lors de son moulage même dans des conditions opératoires sévères.

Par polymère du fluorure de vinylidène, on entend désigner aussi bien les homopolymères du fluorure de vinylidène que les copolymères comprenant des unités dérivées de ce monomère. Dans ce dernier cas, les comonomères peuvent être n'importe quel monomère polymérisable par polymérisation radicalaire tel que les oléfines non substituées, les esters vinyliques et les esters acryliques. De préférence, les comonomères sont des oléfines halogénées et, plus particulièrement des oléfines polyhalogénées. De bons résultats ont été obtenus avec l'éthylène ou le propylène substitué par au moins deux atomes de fluor et, plus particulièrement, avec le monochlortrifluoréthylène et l'hexafluorpropylène.

La teneur en unités dérivées du fluorure de vinylidène des polymères est en général supérieure à 10% et, de préférence, à 50%. La composition peut également être constituée d'un mélange d'homopolymères et de copolymères. Elle peut éventuellement contenir d'autres polymères fluorés ou non fluorés, de préférence en quantités inférieures à 20% en poids.

A titre d'exemples d'agent soufflant convenant pour la composition selon l'invention, on peut citer l'acide malique, l'acide lactique, l'acide citrique, le tartrate monosodique, le lactate de sodium et le citrate monosodique. Parmi ces agents soufflants, les citrates alcalins ont la préférence.

De très bons résultats ont été obtenus lorsque l'agent soufflant comprend du bicarbonate de sodium en plus de l'acide hydroxycarboxylique ou du sel alcalin dérivé d'un tel acide.

La composition conforme à l'invention contient en général de 0,05 à 20%, et de préférence de 0,1 à 2%, en poids d'agent soufflant par rapport au poids de polymère du fluorure de vinylidène mais il peut s'avérer utile d'utiliser des quantités d'agent soufflant plus élevées pour certaines applications particulières.

Il est facile de déterminer expérimentalement dans chaque cas particulier d'application la quantité d'agent soufflant à incorporer à la composition pour un objet présentant la densité souhaitée.

Lorsque l'agent soufflant est un mélange de citrate monosodique et de bicarbonate de sodium, un rapport en poids entre le citrate monosodique et le bicarbonate de sodium du mélange compris entre 5 et 9 s'est révélé particulièrement avantageux.

La composition selon l'invention peut contenir en ourte d'autres additifs usuels tels que des plastifiants, des stabilisants, des lubrifiants, des matières de charge, des colorants, ou des pigments. Il peut en outre se révéler très avantageux d'incorporer un agent de nucléation; on peut citer l'oxyde de zinc et le carbonate de calcium en poudre. La quantité d'agent de nucléation est en général inférieure à 2% en poids du poids de polymère du fluorure de vinylidène.

Pour réaliser des objets cellulaires finis ou semis-finis à partir de la composition selon l'invention, en général, on introduit celle-ci dans une machine de moulage et on la porte à une température supérieure à la température de décomposition thermique de l'agent soufflant mais inférieure à la température de dégradation thermique du polymère du fluorure de vinylidène, à une pression comprise habituellement entre 1 et 20 bars avant de procéder à sons moulage.

La composition de moulage selon l'invention peut être préparée in situ au moment de son utilisation, par exemple par une introduction dosée en continu de ses constituants dans le système d'alimentation d'une machine de moulage.

En général, on préfère toutefois réaliser à l'avance la composition de moulage et la conditionner sous une forme qui peut être emballée, transportée et éventuellement stockée avant son utilisation.

Dans ce cas, et selon un premier procédé, la composition de moulage peut être réalisée par compactage à froid du ou des agents soufflants avec le polymère dérivé du fluorure de vinylidène à l'état pulvérulent.

Selon un second procédé, la composition de moulage peut être conditionnée par granulation par extrusion, c'est-à-dire en introduisant des quantités adéquatement dosées de ses constituants dans la trémie d'une extrudeuse et en granulant l'extrudat produit. Il convient toutefois dans ce cas d'extruder la composition à granuler à une température suffisamment élevée pour provoquer la fusion du polymère mais à une température suffisamment basse pour éviter une décomposition thermique prématurée de l'agent soufflant.

Lorsque le polymère du fluorure de vinylidène présente une température minimale d'extrusion égale ou supérieure à la température de décomposition thermique de l'agent soufflant choisi, comme c'est le cas par exemple lorsque le polymère est un homopolymère du fluorure de vinylidène et l'agent soufflant du citrate monosodique, il n'est pas possible d'exploiter la technique de granulation par extrusion pour conditionner la composition mais la technique de compactage à froid peut être utilisée avantageusement.

La composition conforme à l'invention peut avantageusement être réalisée à partir d'un mélange maître du polymère dérivé du fluorure de vinylidène et de l'agent soufflant contenant une proportion élevée supérieure à 20% et pouvant aller jusqu'à 50% en poids, de l'agent soufflant. Ce mélange maître est ensuite dispersé selon une proportion adéquate dans du polymère éventuellement additionné des autres constituants de la composition.

En préparant un mélange maître, il est possible d'utiliser un agent soufflant ayant une température de dégradation thermique inférieure à la température minimale d'extrusion du polymère.

Dans ce cas, en effet, le mélange maître peut être réalisé à partir d'un autre polymère du fluorure de vinylidène ayant une température minimale d'extrusion inférieure à la température de décomposition thermique de l'agent soufflant puis en dispersant les granules ainsi obtenus dans des granules du polymère du fluorure de vinylidène à température minimale d'extrusion élevée.

Ainsi pour réaliser une composition à base d'un homopolymère du fluorure de vinylidène et de citrate monosodique, on peut granuler le citrate monosodique avec un copolymère de fluorure de vinylidène à forte ou à faible teneur en unités dérivées du monochlortrifluoréthylène ou de l'hexafluorpropylène, ces copolymères ayant une température minimale d'extrusion inférieure à la température de décomposition thermique du citrate monosodique, et ensuite mélanger les granules ainsi obtenus avec une proportion appropriée de granules de polyfluorure de vinylidène.

La composition conforme à l'invention convient particulièrement pour le moulage par extrusion ou par injection d'objets finis ou semi-finis de structure cellulaire. On constate en effet que les objets ainsi produits présentent une structure cellulaire uniforme et sont exempts de toute dégradation apparente ou non apparente. La masse spécifique apparente des articles produits peut, selon les conditions de mise en oeuvre et la composition de moulage utilisée varier entre 0,7 et 1,7 g/cm$^3$.

La composition conforme à l'invention est également particulièrement indiquée pour le moulage par injection d'objets de structure très faiblement cellulaire. Dans ce cas, la quantité d'agent soufflant incorporée à la composition est relativement faible. On constate, en effet, que les objets moulés à partir d'une telle composition ne manifestent pas de tendance au retrait localisé après démoulage.

Il a en outre été constaté que les compositions conformes à l'invention conduisent à des porduits de structure dense ou cellulaire qui présentent une constante diélectrique nettement plus faible que celle des produits obtenus à partir de compositions exemptes d'agent soufflant. Cette propriété se révèle particulièrement intéressante pour certaines applications telles que le revêtement de câbles pour transmissions téléphoniques. Ces compositions conformes à l'invention permettent dans ce cas de produire des câbles ne présentant pratiquement aucun phénomène d'interférence entre les conducteurs distincts.

La composition conforme à l'invention est illustrée par les exemples pratiques qui souvent.

Exemple 1 (comparatif)

Dans cet exemple, de comparaison, on met en oeuvre une composition contenant un agent soufflant classique.

Par compactage à froid, on prépare un mélange comprenant les ingrédients suivants donnés en parties en poids:

| | |
|---|---|
| Polyfluorure de vinylidène (de marque SOLEF, de type 1008) | 100 |
| Azodicarbonamide | 0,3 |
| Bicarbonate de sodium | 0,1 |
| Oxyde de zinc | 0,1 |
| Talc | 0,5 |

A partir de cette composition, on moule un cube cellulaire par injection à 230° C. On constate que l'objet réalisé à une masse spécifique apparente de 1,3 g/cm³ mais présente une coloration brun foncé qui témoigne d'une dégradation importante du polymère.

## Exemple 2

Par compactage à froid, on prépare un mélange comprenant les ingrédients suivants donnés en parties en poids:

| | |
|---|---|
| Polyfluorure de vinylidène (de marque SOLEF, de type 1008) | 100 |
| Citrate monosodique | 0,3 |
| Bicarbonate de sodium | 0,1 |
| Oxade de zinc | 0,1 |
| Talc | 0,5 |

A partir de cette composition, on moule par injection un cube de structure cellulaire comme dans l'exemple 1.

On constate que l'objet réalisé à une masse spécifique apparente de 1,3 g/cm³ et présente une coloration blanc jaune qui est usuelle pour les objets en polyfluorure de vinylidène. L'objet moulé ne présente donc aucune trace de dégradation thermique du polymère.

## Exemple 3

Par granulation par extrusion à 160° C, on réalise un mélange maître ayant la composition suivante donnée en parties en poids:

| | |
|---|---|
| Copolymère de fluorure de vinylidène et d'hexafluorpropylène titrant 10% en poids d'hexafluorpropylène | 100 |
| Citrate monosodique | 3 |
| Oxyde de zinc | 1 |

On mélange les granules ainsi obtenus avec des granules de polyfluorure de vinylidène dans un rapport en poids de 1 à 10.

A partir de la composition ainsi obtenue on moule par injection à 230° C des pièces de structure dens telles que des récipients. On constate que les pièces moulées présentent une coloration blanc jaune et ne subissent aucun retrait localisé lors de leur refroidissement.

## Exemple 4

A partir de la formulation décrite dans l'exemple 3, on moule par injection à 230° C une plaque de structure cellulaire ayant une densité de 1,31 g/cm³ et on mesure la constante diélectrique à 23° C pour des fréquences de 60 Hz et de 100 Hz. Les constantes mesurées s'élèvent respectivement à 4,8 et 4,4.

A partir de polyfluorure de vinylidène de marque Solef et de type 1008, on moule une plaque similaire de structure dens dont la densité s'élève à 1;81 g/cm³ et on mesure la constante diélectrique à 28° C pour des fréquences de 60 Hz et de 100 Hz. Les constantes mesurée s'élèvent respectivement à 8,8 et 8,1.

Il apparaît donc que les compositions conformes à l'invention conduisent à des produits ayant une constante diélectrique moins élevée.

## Revendications

1. Composition comprenant un polymère du fluorure de vinylidène et un agent soufflant caractérisé en ce que l'agent soufflant comprend un acide hydroxycarboxylique ou un sel alcalin dérivé d'un tel acide présentant une température de décomposition thermique inférieure à la température de dégradation thermique du polymère.

2. Composition selon la revendication 1, caractérisé en ce que l'agent soufflant comprend un citrate alcalin.

3. Composition selon la revendication 1 ou 2, caractérisé en ce que l'agent soufflant comprend en outre du bicarbonate de sodium.

4. Composition de moulage selon la revendication 3, caractérisé en ce que le rapport en poids entre le citrate monosodique et le bicarbonate de sodium est compris entre 5 et 9.

5. Composition de moulage selon l'une quelconque des revendications 1 à 5, caractérisé en ce qu'elle contient de 0,1 à 2% en poids d'agent soufflant par rapport au poids de polymère.

6. Composition selon l'une quelconque des revendications 1 à 4, caractérisé en ce qu'elle est constituée d'un mélange maître de polymère du fluorure de vinylidène et d'agent soufflant contenant de 20 à 50% en poids d'agent soufflant par rapport au poids de polymère et d'un polymère identique ou différent du fluorure de vinylidène ne contenant pas d'agent soufflant.

7. Composition selon la revendication 6, caractérisé en ce que le polymère du mélange maître est un copolymère de fluorure de vinylidène et du monochlortrifluoréthylène ou de l'hexyfluorpropylène.

8. Composition selon l'une quelconque des revendications 1 à 7, caractérisé en ce que le polymère du fluorure de vinylidène est un homopolymère ou un copolymère contenant au moins 50% d'unités dérivées du fluorure de vinylidène et des unités d'éthylène ou de propylène substituées par au moins deux atomes de fluor.

9. Procédé pour fabriquer des objets cellulaires ou denses caractérisé en ce que l'on utilise une composition selon l'une quelconque des revendications 1 à 8.

## Patentansprüche

1. Ein Treibmittel enthaltende Polyvinylidenfluoridzusammensetzung, dadurch gekennzeichnet, daß das Treibmittel eine Hydroxycarbonsäure oder ein Alkalisalz einer solchen Säure mit einer Wärmezersetzungstemperatur unterhalb der Wärmeabbautemperatur des Polymers umfaßt.

2. Zusammensetzung gemäß Anspruch 1, dadurch gekennzeichnet, daß das Treibmittel ein Alkalicitrat umfaßt.

3. Zusammensetzung gemäß Anspruch 1 oder 2, dadurch gekennzeichnet, daß das Treibmittel außerdem Natriumbicarbonat umfaßt.

4. Formmasse gemäß Anspruch 3, dadurch gekennzeichnet, daß das Gewichtsverhältnis zwischen dem Mononatriumcitrat und dem Natriumbicarbonat zwischen 5 und 9 liegt.

5. Formmasse gemäß einem der Ansprüche 1 bis 5, dadurch gekennzeichnet, daß sie 0,1 bis 2 Gew.-% Treibmittel bezogen auf das Gewicht des Polymeren enthält.

6. Zusammensetzung gemäß einem der Ansprüche 1 bis 4, dadurch gekennzeichnet, daß sie aus einer Hauptmischung von Polyvinylidenfluorid und Treibmittel, enthaltend 20 bis 50 Gew.-% Treibmittel bezogen auf das Gewicht des Polymeren und aus einem identischen oder unterschiedlichen Polyvinylidenfluorid, welches kein Treibmittel enthält, besteht.

7. Zusammensetzung gemäß Anspruch 6, dadurch gekennzeichnet, daß das Polymere der Hauptmischung ein Mischpolymer von Vinylidenfluorid und Monochlortrifluorethylen oder Hexafluorpropylen ist.

8. Zusammensetzung gemäß einem der Ansprüche 1 bis 7, dadurch gekennzeichnet, daß das Polyvinylidenfluorid ein Homopolymer oder ein Mischpolymer enthaltend mindestens 50% Vinylidenfluorideinheiten und Ethylen- oder Propyleneinheiten substituiert durch mindestens 2 Fluoratome ist.

9. Verfahren zur Herstellung von Schaumkörpern oder kompakten Körpern, dadurch gekennzeichnet, daß man eine Zusammensetzung gemäß einem der Ansprüche 1 bis 8 benutzt.

**Claims**

1. Composition comprising a vinylidene fluoride polymer and a blowing agent, characterized in that the blowing agent comprises a hydroxycarboxylic acid or an alkali metal salt derived from such an acid, having a thermal decomposition temperature lower than the thermal degradation temperature of the polymer.

2. Composition according to claim 1, characterized in that the blowing agent comprises an alkali metal citrate.

3. Composition according to claim 1 or 2, characterized in that the blowing agent, moreover, comprises sodium bicarbonate.

4. Moulding composition according to claim 3, characterized in that the weight ratio of monosodium citrate to sodium bicarbonate is between 5 and 9.

5. Moulding composition according to any one of claims 1 to 5, characterized in that it contains from 0,1 to 2% by weight of blowing agent, relative to the weigth of polymer.

6. Composition according to any one of claims 1 to 4, characterized in that it consists of a master batch of vinylidene fluoride polymer and blowing agent containing from 20 to 50% by weight of blowing agent relative to the weight of polymer and of a polymer identical with or different from vinylidene fluoride and not containing a blowing agent.

7. Composition according to claim 6, characterized in that the polymer in the master batch is a copolymer of vinylidene fluoride and monochlorotrifluoroethylene or hexafluoropropylene.

8. Composition according to any one of claims 1 to 7, characterized in that the vinylidene fluoride polymer is a homopolymer or a copolymer containing at least 50% of units derived from vinylidene fluoride and units of ethylene or propylene substituted by at least two fluorine atoms.

9. Process for the manufacture of cellular or dens articles, characterized in that a composition according to any one of claims 1 to 8 is used.